# EUROPÄISCHE PATENTSCHRIFT

(11) **EP 3 353 496 B1**
(45) Veröffentlichungstag und Bekanntmachung des Hinweises auf die Patenterteilung: **30.09.2020**
(21) Anmeldenummer: 16758133.9
(22) Anmeldetag: 23.08.2016
(51) Int. Cl.: G01C 21/32

(54) **VERFAHREN UND VORRICHTUNG ZUR BEREITSTELLUNG VON DATEN FÜR EINE GEOMETRIEKARTE FÜR EIN AUTONOMES ODER AUTOMATISIERTES FAHREN EINES FAHRZEUGS**
PROCEDURE AND DEVICE FOR PROVIDING DATA FOR A GEOMETRICAL MAP FOR AUTONOMOUS OR AUTOMATIZED VEHICLE DRIVING
PROCÉDÉ ET DISPOSITIF POUR FOURNIR DES DONNÉES POUR UNE CARTE GÉOMETRIQUE POUR CONDUITE AUTONOME OU AUTOMATISÉE

(30) Priorität: 21.09.2015 DE 102015218041
(43) Veröffentlichungstag der Anmeldung: 01.08.2018
(73) Patentinhaber: Bayerische Motoren Werke Aktiengesellschaft, 80809 München (DE)
(72) Erfinder: JURK, Reinhard, 82194 Groebenzell (DE)
(86) Internationale Anmeldenummer: PCT/EP2016/069887
(87) Internationale Veröffentlichungsnummer: WO 2017/050507

(56) Entgegenhaltungen:
- DE-A1-102013 208 521
- DE-A1-102013 211 696

## Beschreibung

Die Erfindung betrifft ein Verfahren und eine korrespondierende Vorrichtung zur Bereitstellung von Daten für eine Geometriekarte für ein autonomes oder automatisiertes Fahren eines Fahrzeugs, ein Verfahren und eine korrespondierende Vorrichtung zur Bereitstellung einer Geometriekarte für autonomes oder automatisiertes Fahren sowie ein Verfahren und eine korrespondierende Vorrichtung zum Betreiben eines Fahrzeugs.

Eine Trajektorienplanung für Fahrzeuge, die hochautomatisiert oder sogar autonom fahren, stellt hohe Anforderungen an eine Sensorik des Fahrzeugs, zum Beispiel an einen Radar-Sensor, Kameras und/oder LIDAR-Sensor (Light Detection and Ranging Sensor), um eine kollisionsfreie Trajektorie zu planen.

Detaillierte und hochgenaue Kartendaten sind die Voraussetzung für ein hochautomatisiertes Fahren. Hierfür geeignete Karten benötigen eine Auflösung im Bereich von 10 Zentimetern. Diese Karten, im Folgenden hochgenaue Geometriekarten (HGK) genannt, umfassen sehr genaue Informationen zum Fahrbahnverlauf, insbesondere sehr präzise Geometriedaten eines Fahrbahnverlaufs, und weisen Informationen auf, anhand derer sich ein jeweiliges Fahrzeug sehr genau lokalisieren kann. Fahrerassistenzsysteme können von diesen vorausschauenden Kartendaten profitieren, insbesondere autonome Fahrfunktionen.

Zum Erzeugen solcher Karten werden heute Straßen mit speziellen Messfahrzeugen befahren, die eine spezielle Sensorik aufweisen, die insbesondere ausgebildet ist, Daten mit sehr hoher Ortsgenauigkeit zu ermitteln.

DE 10 2013 211 696 A1 offenbart ein Verfahren zum Vervollständigen und/oder Aktualisieren einer digitalen Straßenkarte zumindest einer geographischen Region, mit den Schritten: a) Erfassen eines digitalen Bilds eines Streckenabschnitts mittels einer Kamera eines auf dem Streckenabschnitt befindlichen Kraftfahrzeugs; b) Ermitteln einer aktuellen Position des Kraftfahrzeugs in Breitenrichtung des Streckenabschnitts und/oder zumindest einer Eigenschaft des Streckenabschnitts anhand des Bilds mittels einer Recheneinrichtung des Kraftfahrzeugs; c) Übermitteln eines Datensatzes an eine Servereinrichtung; wobei die Schritte a) bis c) durch eine Vielzahl von in der Region befindlichen Kraftfahrzeugen durchgeführt werden und die digitale Straßenkarte anhand der empfangenen Datensätze mittels der Servereinrichtung vervollständigt und/oder aktualisiert Die DE 10 2013 208 521 A1 offenbart ein Verfahren zum Erlernen und Erstellen eines digitalen Straßenmodells. Es werden von einer Mehrzahl von Fahrzeugen Trajektoriendaten, umfassend Odometriedaten, und Perzeptionsdaten erfasst.Die Anzahl an Trajektorienpunkten für die Erstellung eines Merkmalsrasters kann so bestimmt werden, dass sie einer bestimmten Fahrstrecke entsprechen.

Die Aufgabe, die der Erfindung zugrunde liegt, ist es, ein Verfahren und eine korrespondierende Vorrichtung zur Bereitstellung von Daten für eine Geometriekarte für ein autonomes oder automatisiertes Fahren eines Fahrzeugs zu schaffen, die eine kostengünstige und/oder aktuelle Bereitstellung der Daten ermöglichen.

Die Aufgabe wird gelöst durch die Merkmale der unabhängigen Patentansprüche. Vorteilhafte Ausgestaltungen sind in den Unteransprüchen gekennzeichnet.

Die Erfindung zeichnet sich gemäß einem ersten und zweiten Aspekt aus durch ein Verfahren nach Anspruch 1 und eine korrespondierende Vorrichtung nach Anspruch 6 zur Bereitstellung von Daten für eine Geometriekarte für ein autonomes oder automatisiertes Fahren eines Fahrzeugs.

Dies hat den Vorteil, dass für die Erfassung der Daten zur Erstellung einer hochgenauen Geometriekarte für ein autonomes oder automatisiertes Fahren eines Fahrzeugs keine Spezialfahrzeuge erforderlich sind, sondern dass die Erfassung der Daten zur Erstellung der hochgenauen Geometriekarte mit Kundenfahrzeugen und/oder Konsumfahrzeugen erfolgen kann. Dies ermöglicht eine kostengünstige und aktuelle Bereitstellung der Daten zur Erstellung einer hochgenauen Geometriekarte.

Für die Vorgabe der Fahrstreckenabschnitte werden vorzugsweise sämtliche oder eine Vielzahl von Fahrstrecken in einem vorgegebenen Gebiet in Fahrstreckenabschnitte unterteilt, die jeweils eine vorgegebene Fahrlänge aufweisen. Das Gebiet kann beispielsweise ein Straßennetz von Europa und/oder Deutschland umfassen. Aufgrund von Fehlern beim Erfassen der Odometriedaten und beim Reproduzieren beziehungsweise Nachfahren erfasster Odometriedaten kommt es bei Nutzung der erfassten Odometriedaten zur Reproduktion einer der vom Fahrzeug gefahrenen Trajektorie zu Abweichungen zwischen einer gewünschten Zielposition auf einer Fahrbahn und einer tatsächlich erreichten Position auf der Fahrbahn. Die Fahrlänge wird hierbei beispielsweise derart vorgegeben, dass die Abweichung einen Grenzwert nicht überschreitet. Für eine Ermittlung der Erfassungsgenauigkeit der Fahrzeugsensorik zur Erfassung der Odometriedaten können Referenzsensoren, die ähnliche Eigenschaften aufweisen, wie die Sensoren, die üblicherweise in Kundenfahrzeugen beziehungsweise Konsumfahrzeugen von Automobilherstellern verbaut sind, genutzt werden.

Analog können für eine Ermittlung der Reproduziergenauigkeit der bereitgestellten Odometriedaten Referenzstellglieder und/oder Referenzstellantriebe genutzt werden, die ähnliche Eigenschaften aufweisen, wie die Stellglieder beziehungsweise Stellantriebe, die üblicherweise in Kundenfahrzeugen beziehungsweise Konsumfahrzeugen von Automobilherstellern verbaut sind.

Die Odometriedaten für den vorgegebenen jeweiligen Fahrstreckenabschnitt können jeweils von verschiedenen Fahrzeugen erfasst werden, die den Fahrstreckenabschnitt zu unterschiedlichen Zeiten befahren und/oder von einem einzelnen Fahrzeug, das die Fahrstreckenabschnitt mehrmals befährt.

In einer vorteilhaften Ausgestaltung gemäß dem ersten und zweiten Aspekt ist den Fahrstreckenabschnitten jeweils ein vorgegebener Abschnittstyp zugeordnet und die maximale Fahrlänge des jeweiligen Fahrstreckenabschnitts ist abhängig von dem jeweils zugeordneten Abschnittstyp. Hierbei können beispielsweise folgende Abschnittstypen existieren: Autobahn, Landstraße, Ortsdurchfahrt, Wohngebietsnebenstraße, unbefestigte Straße und so weiter. Beispielsweise kann eine maximale Fahrlänge bei einer Autobahn mit wenigen Kurven und Abzweigungsmöglichkeiten größer sein, als bei einer kurvenreichen Landstraße.

In einer weiteren vorteilhaften Ausgestaltung gemäß dem ersten und zweiten Aspekt ist die maximale Fahrlänge des jeweiligen Fahrstreckenabschnitts abhängig von zumindest einer Fahrzeugbetriebsgröße und/oder einer Umfeldgröße, die Einfluss auf das Lenkverhalten und/oder Antriebsverhalten des Fahrzeugs hat. Die Fahrzeugbetriebsgrößen und/oder Umfeldgrößen können Durchschnittswerte und/oder Erfahrungswerte repräsentieren, die von einer Vielzahl von Fahrzeugen für den jeweiligen Fahrstreckenabschnitt erfasst wurden. Dies ermöglicht, die jeweilige Fahrlänge für die jeweiligen Fahrstreckenabschnitte abhängig von Randbedingungen, die die Erfassungsgenauigkeit und/oder Reproduziergenauigkeit für diesen Fahrstreckenabschnitt beeinflussen können, zu berücksichtigen.

In einer weiteren vorteilhaften Ausgestaltung gemäß dem ersten und zweiten Aspekt wird jeweils eine Positionsinformation für das Fahrzeug beim Befahren des jeweiligen Fahrstreckenabschnitts ermittelt und/oder bereitgestellt und die Odometriedaten werden zugeordnet zu der Positionsinformation des Fahrzeugs bereitgestellt. Dies ermöglicht eine einfache Zuordnung der empfangenen Odometriedaten zu den jeweiligen Fahrstreckenabschnitten und erleichtert somit eine Weiterverarbeitung.

In einer weiteren vorteilhaften Ausgestaltung gemäß dem ersten und zweiten Aspekt repräsentiert die Positionsinformation eine erfasste und/oder ermittelte relative oder absolute Position des Fahrzeugs und eine Abweichung zwischen einer realen Position des Fahrzeugs und der erfassten und/oder ermittelten Position des Fahrzeugs ist kleiner als 10 Zentimeter. Die relative Position bezieht sich vorzugsweise auf den jeweiligen Fahrstreckenabschnitt, den das Fahrzeug befährt und/oder auf einen Fahrstreckenabschnitt, der in unmittelbarer Zukunft von dem Fahrzeug befahren wird und/oder auf einen Fahrstreckenabschnitt, den das Fahrzeug unmittelbar zuvor befahren hat. Vorteilhafterweise kann dies genutzt werden, jeweilige Odometriedaten zu vergleichen, die für den jeweiligen Fahrstreckenabschnitt erfasst wurden, beispielsweise von verschiedenen Fahrzeugen. Des Weiteren kann so aus den Odometriedaten sehr genau, zum Beispiel in Verbindung mit weiteren Fahrbahninformationen, ein Fahrkorridor ermittelt werden.

Die Erfindung zeichnet sich gemäß einem dritten und vierten Aspekt aus durch ein Verfahren nach Anspruch 7 und eine korrespondierende Vorrichtung nach Anspruch 8 zur Bereitstellung einer Geometriekarte für autonomes oder automatisiertes Fahren, die eine Vielzahl von Informationseinheiten umfasst. Hierbei werden Daten, die gemäß dem Verfahren zur Bereitstellung von Daten für eine Geometriekarte für ein autonomes oder automatisiertes Fahren eines Fahrzeugs oder die gemäß einer vorteilhaften Ausgestaltung des Verfahrens zur Bereitstellung von Daten für eine Geometriekarte für ein autonomes oder automatisiertes Fahren eines Fahrzeugs bereitgestellt werden, empfangen. Für die jeweiligen Fahrstreckenabschnitte werden jeweils abhängig von den jeweiligen Odometriedaten Referenz-Odometriedaten und/oder ein Referenz-Fahrkorridor und/oder eine Referenz-Trajektorie ermittelt und/oder aktualisiert und/oder verifiziert. Für die jeweiligen Fahrstreckenabschnitte wird jeweils eine Informationseinheit bereitgestellt, die die Referenz-Odometriedaten und/oder den Referenz-Fahrkorridor und/oder die Referenz-Trajektorie des jeweiligen Fahrstreckenabschnitts umfasst.

Vorteilhafte Ausgestaltungen des ersten und zweiten Aspekts sind hierbei auch gültig für den dritten und vierten Aspekt.

Gemäß einem fünften und sechsten Aspekt zeichnet sich die Erfindung aus durch ein Verfahren nach Anspruch 9 und eine korrespondierende Vorrichtung nach Anspruch 10 zum Betreiben eines Fahrzeugs. Hierbei wird zumindest eine Informationseinheit für einen vorgegebenen Fahrstreckenabschnitt, der gemäß dem Verfahren zur Bereitstellung einer Geometriekarte für autonomes oder automatisiertes Fahren gemäß dem dritten Aspekt bereitgestellt wird, empfangen. Abhängig von Daten, die die Informationseinheit umfasst, wird eine Soll-Trajektorie des Fahrzeugs für den vorgegebenen Fahrstreckenabschnitt ermittelt. Das Fahrzeug kann dann abhängig von der ermittelten Soll-Trajektorie gesteuert werden.

Vorteilhafte Ausgestaltungen des dritten und vierten Aspekts gelten hierbei auch für den fünften und sechsten Aspekt.

Gemäß einem weiteren Aspekt zeichnet sich die Erfindung aus durch ein Computerprogramm nach Anspruch 11, wobei das Computerprogramm ausgebildet ist, das Verfahren gemäß dem ersten Aspekt oder dritten Aspekt oder fünften Aspekt durchzuführen und/oder eine vorteilhafte Ausgestaltung des Verfahrens gemäß dem ersten Aspekt und/oder gemäß dem dritten Aspekt und/oder dem fünften Aspekt auf einer Datenverarbeitungsvorrichtung durchzuführen.

Gemäß einem weiteren Aspekt zeichnet sich die Erfindung aus durch ein Computerprogrammprodukt nach Anspruch 12, das ausführbaren Programmcode umfasst, wobei der Programmcode bei Ausführung durch eine Datenverarbeitungsvorrichtung das Verfahren gemäß dem ersten Aspekt und/oder dem dritten Aspekt und/oder dem fünften Aspekt ausführt und/oder eine vorteilhafte Ausgestaltung des Verfahrens gemäß dem ersten Aspekt und/oder dem dritten Aspekt und/oder dem fünften Aspekt.

Das Computerprogrammprodukt umfasst insbesondere ein von der Datenverarbeitungsvorrichtung lesbares Medium, auf dem der Programmcode gespeichert ist.

Ausführungsbeispiele der Erfindung sind im Folgenden anhand der schematischen Zeichnung näher erläutert.

Es zeigt:
- Figur 1: ein System zur Unterstützung eines autonomen Fahrens von Fahrzeugen,
- Figur 2: ein beispielhaftes Ablaufdiagramm für ein erstes Programm zur Bereitstellung von Daten für eine Geometriekarte für ein autonomes oder automatisiertes Fahren eines Fahrzeugs,
- Figur 3: eine Fahrstrecke mit Fahrstreckenabschnitten,
- Figur 4: ein beispielhaftes Ablaufdiagramm für ein zweites Programm zur Bereitstellung einer Geometriekarte für autonomes oder automatisiertes Fahren, und
- Figur 5: ein beispielhaftes Ablaufdiagramm für ein drittes Programm zum Betreiben eines Fahrzeugs.

Elemente gleicher Konstruktion oder Funktion sind figurenübergreifend mit den gleichen Bezugszeichen gekennzeichnet.

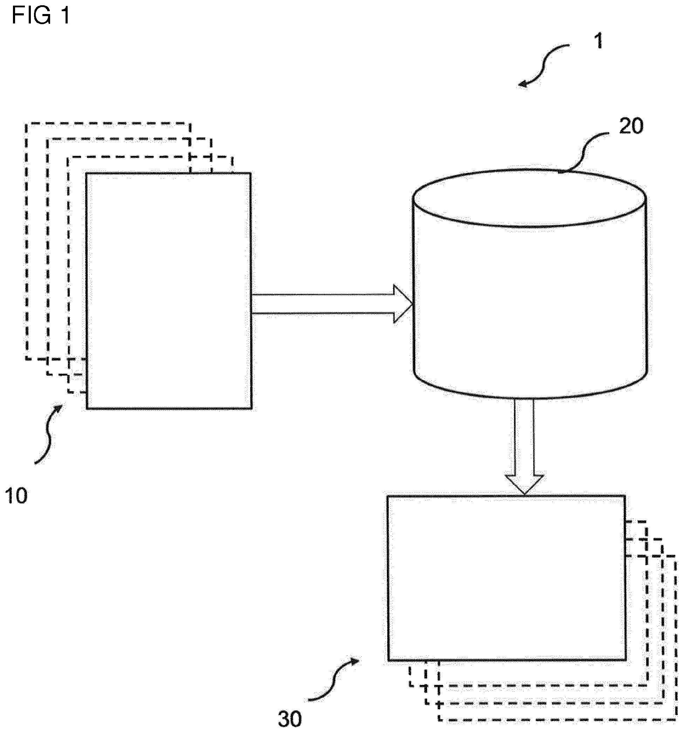

Figur 1 zeigt ein System 1 zur Unterstützung eines autonomen Fahrens von Fahrzeugen. Das System 1 umfasst zumindest eine Erfassungseinrichtung 10, die in einem Fahrzeug angeordnet ist. Die Erfassungseinrichtung 10 kann auch als Vorrichtung zum Bereitstellen von Daten für eine Geometriekarte für ein autonomes oder automatisiertes Fahren eines Fahrzeugs bezeichnet werden. Ferner umfasst das System 1 eine Auswerteeinrichtung 20, die beispielsweise stationär in einem Backend eines Fahrzeugherstellers angeordnet ist. Die Auswerteeinrichtung 20 kann auch als Vorrichtung zur Bereitstellung einer Geometriekarte für autonomes oder automatisiertes Fahren bezeichnet werden. Des Weiteren umfasst das System 1 zumindest eine Steuereinrichtung 30, die in dem Fahrzeug oder in einem weiteren Fahrzeug angeordnet ist. Die Steuereinrichtung 30 kann auch als Vorrichtung zum Betreiben eines Fahrzeugs bezeichnet werden. Vorzugsweise umfasst das System 1 eine Vielzahl von Erfassungseinrichtungen 10 und eine Vielzahl von Steuereinrichtungen 30. Die zumindest eine Erfassungseinrichtung 10 und die zumindest eine Steuereinrichtung 30 können in dem jeweiligen Fahrzeug beispielsweise als eine Steuervorrichtung ausgebildet sein.

Die Erfassungseinrichtung 10 weist eine vorgegebene Sensorik auf, die ausgebildet ist, die Odometriedaten Phi, 1 des Fahrzeugs, das heißt einen zurückgelegten Weg des Fahrzeugs 1 und einen jeweiligen Lenkwinkel Phi des Fahrzeugs, zu erfassen und/oder Messgrößen zu erfassen, die repräsentativ sind für den zurückgelegten Weg 1 und/oder den Lenkwinkel Phi des Fahrzeugs. Die Erfassungseinrichtung 10 weist beispielsweise einen Lenkwinkelsensor und einen Radsensor auf.

Alternativ kann die Sensorik der Erfassungseinrichtung 10 zugeordnet sein.

Die Erfassungseinrichtung 10 weist beispielsweise eine Recheneinheit und einen Speicher auf. Der Speicher kann einen Programmspeicher und einen Datenspeicher umfassen. Die Erfassungseinrichtung 10 ist ausgebildet, beispielsweise mittels der Recheneinheit und dem Speicher, ein erstes Programm zur Bereitstellung von Daten für eine Geometriekarte für autonomes Fahren auszuführen.

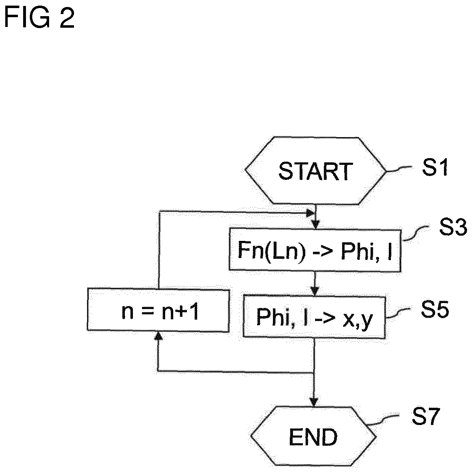

Ein beispielhaftes Ablaufdiagramm des ersten Programms ist in Figur 2 gezeigt. Das erste Programm wird in einem Schritt S1 gestartet, in dem gegebenenfalls Variablen initialisiert werden können. Die Erfassungseinrichtung 10 ist beispielsweise ausgebildet, eine Einfahrt in einen der vorgegebenen Fahrstreckenabschnitte Fn zu erkennen und das erste Programm zu starten.

In einem Schritt S3 werden beim Befahren eines vorgegebenen Fahrstreckenabschnitts mit dem Fahrzeug mit der vorgegebenen Sensorik des Fahrzeugs die Odometriedaten Phi, 1 des Fahrzeugs erfasst und/oder ermittelt. Hierbei weist der vorgegebene Fahrstreckenabschnitt Fn eine vorgegebene maximale Fahrlänge Ln auf.

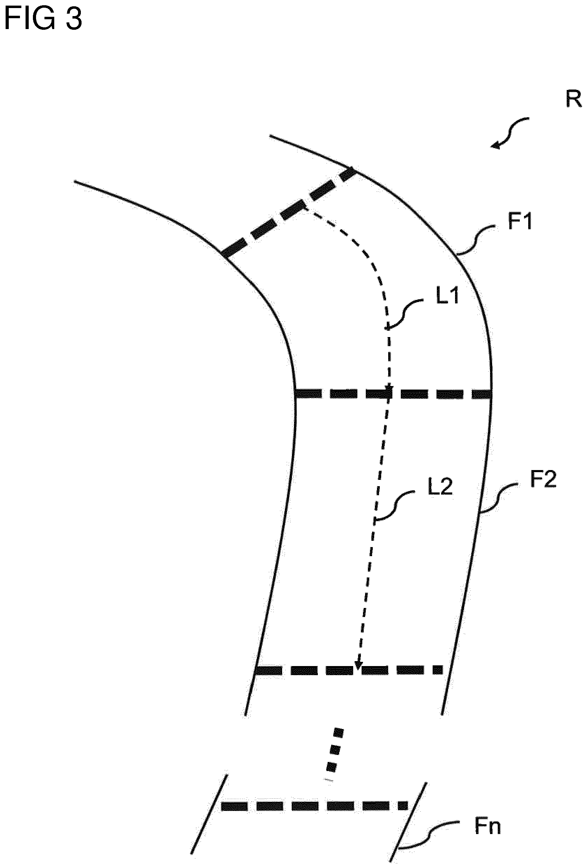

Die Fahrstreckenabschnitte Fn werden dabei beispielsweise derart vorgegeben, dass für die Erfassungseinrichtung 10 Kartendaten bereitgestellt werden, bei der Fahrstrecken R eines vorgegebenen Gebiets jeweils in Fahrstreckenabschnitte Fn mit einer vorgegebenen maximalen Fahrlänge Ln unterteilt sind (siehe Figur 3). Das Gebiet kann beispielsweise ein Straßennetz von Europa und/oder Deutschland umfassen.

Die maximale Fahrlänge Ln des jeweiligen Fahrstreckenabschnitts ist dabei vorgegeben, wobei die maximale Fahrlänge Ln des jeweiligen Fahrstreckenabschnitts beispielsweise vorab abhängig von einer Erfassungsgenauigkeit von Odometriedaten Phi, 1 durch eine vorgegebene Fahrzeugsensorik, und erfindungsgemäß abhängig ist von einer Reproduziergenauigkeit von bereitgestellten Odometriedaten Phi, 1 durch vorgegebene Fahrzeugstellglieder und/oder Fahrzeugstellantriebe ermittelt wird.

Die Erfassungsgenauigkeit kann beispielsweise eine durchschnittliche Erfassungsgenauigkeit von Odometriedaten Phi, 1 repräsentieren, die mittels einer vorgegebenen Fahrzeugsensorik von Fahrzeugen erfasst und/oder ermittelt werden.

Die Reproduziergenauigkeit kann beispielsweise eine durchschnittliche Reproduziergenauigkeit von bereitgestellten Odometriedaten Phi, 1 repräsentieren, die mittels vorgegebener Fahrzeugstellglieder und/oder Fahrzeugstellantriebe von Fahrzeugen bei Nutzung der bereitgestellten Odometriedaten Phi, 1 zur Reproduktion einer der vom Fahrzeug gefahrenen Trajektorie erreicht werden kann.

Aufgrund der beiden Ungenauigkeitsketten, Erfassungsungenauigkeit und Reproduziergenauigkeit, kann die maximale Fahrlänge Ln des jeweiligen Fahrstreckenabschnitts Fn je nach Genauigkeit bei der Erfassung und Reproduktion bei einigen hundert Metern liegen.

Den jeweiligen Fahrstreckenabschnitten Fn kann jeweils ein vorgegebener Abschnittstyp zugeordnet sein und die maximale Fahrlänge Ln des jeweiligen Fahrstreckenabschnitts kann abhängig von dem zugeordneten Abschnittstyp vorgegeben werden. Hierbei können beispielsweise folgende Abschnittstypen existieren: Autobahn, Landstraße, Ortsdurchfahrt, Wohngebietsnebenstraße, unbefestigte Straße und so weiter.

Alternativ oder zusätzlich kann die maximale Fahrlänge Ln des jeweiligen Fahrstreckenabschnitts abhängig von zumindest einer Fahrzeugbetriebsgröße und/oder einer Umfeldgröße, die Einfluss auf das Lenkverhalten und/oder Antriebsverhalten des Fahrzeugs hat, vorgegeben werden.

Die Fahrzeugbetriebsgröße repräsentiert hierbei beispielsweise eine durchschnittliche Reifentemperatur und/oder einen durchschnittlichen Reifenluftdruck von Fahrzeugen, die den jeweiligen Fahrstreckenabschnitt Fn befahren. Die Umfeldgröße ist hierbei beispielsweise repräsentativ für eine durchschnittliche Außentemperatur in einer vorgegebenen Umgebung des jeweiligen Fahrstreckenabschnitts und/oder repräsentativ für eine durchschnittliche Fahrbahnbelagstemperatur oder eine durchschnittliche Windgeschwindigkeit und/oder Windrichtung in der vorgegebenen Umgebung des jeweiligen Fahrstreckenabschnitts.

Die Erfassungseinrichtung 10 ist beispielsweise ausgebildet, eine Einfahrt in einen der vorgegebenen Fahrstreckenabschnitte Fn und/oder eine Ausfahrt aus dem jeweiligen Fahrstreckenabschnitt Fn zu erkennen.

Hierzu kann die Erfassungseinrichtung 10 beispielweise ausgebildet sein, jeweils eine Positionsinformation für das Fahrzeug zu ermitteln. Alternativ kann die Positionsinformation von einer weiteren Einrichtung des Fahrzeugs bereitgestellt werden. Die Positionsinformation kann eine erfasste und/oder ermittelte relative Position in Bezug auf den jeweiligen Fahrstreckenabschnitt Fn oder absolute Position des Fahrzeugs repräsentieren.

Die Positionsinformation wird beispielsweise derart ermittelt, dass eine Abweichung zwischen einer realen Position des Fahrzeugs und der erfassten und/oder ermittelten Position des Fahrzeugs kleiner als 10 cm ist.

Die Positionsinformation kann beispielsweise abhängig von GNSS-Daten (Global Navigation Satellite System Daten) und/oder Umfeldsensordaten und/oder Daten einer hochgenauen Geometriekarte ermittelt werden.

In einem Schritt S5 werden die erfassten und/oder ermittelten Odometriedaten Phi, 1 an einer vorgegebenen Schnittstelle des Fahrzeugs bereitgestellt zur Übertragung an die Auswerteeinrichtung 20. Die Schnittstelle umfasst vorzugsweise eine Luftschnittstelle.

In dem Schritt S5 können die Odometriedaten Phi, 1 beispielsweise zugeordnet zu der erfassten und/oder ermittelten Positionsinformation x,y des Fahrzeugs bereitgestellt werden.

Anschließend kann das erste Programm in einem Schritt S7 beendet werden. Vorzugsweise wird jedoch das erste Programm für einen weiteren Fahrstreckenabschnitt Fn, den das Fahrzeug befährt, wiederholt ausgeführt.

Die jeweils erfassten und/oder ermittelten Odometriedaten Phi, 1 werden vorzugsweise an die Auswerteeinrichtung 20 übermittelt. Die Auswerteeinrichtung 20 ist beispielsweise ausgebildet, mittels einer vorgegebenen Schnittstelle die Odometriedaten Phi, 1 von der Erfassungseinrichtung 10 und/oder einer Vielzahl von Erfassungseinrichtung 10 zu empfangen.

Die Auswerteeinrichtung 20 weist beispielsweise eine Recheneinheit und einen Speicher auf. Der Speicher umfasst vorzugsweise einen Programmspeicher und einen Datenspeicher.

Die Auswerteeinrichtung 20 ist ausgebildet, beispielsweise mittels der Recheneinheit und dem Speicher, ein zweites Programm zur Bereitstellung einer Geometriekarte für autonomes oder automatisiertes Fahren auszuführen. In dem Datenspeicher der Auswerteeinrichtung 20 sind beispielsweise Informationseinheiten B_n der Geometriekarte abgespeichert. Den vorgegebenen Fahrstreckenabschnitten Fn, für die die jeweils die Odometriedaten Phi,l erfasst und/oder ermittelt werden, ist jeweils eine Informationseinheit B_n zugeordnet.

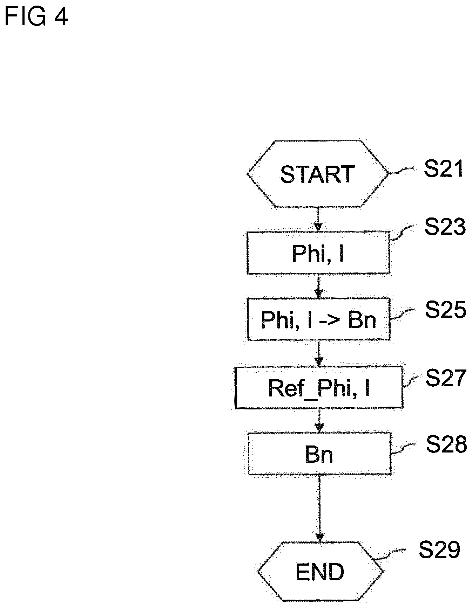

Ein beispielhaftes Ablaufdiagramm des zweiten Programms ist in Figur 4 gezeigt.

Das zweite Programm wird in einem Schritt S21 gestartet, in dem gegebenenfalls Variablen initialisiert werden können. Das zweite Programm wird beispielsweise gestartet, wenn erkannt wird, dass die zumindest eine Erfassungseinrichtung 10 die ermittelten und/oder erfassten Odometriedaten Phi, 1 gesendet hat. Alternativ oder zusätzlich kann die Auswerteeinrichtung 20 ausgebildet sein, die Odometriedaten Phi, 1 von den jeweiligen Erfassungseinrichtungen 10 abzurufen, insbesondere in vorgegebenen Zeitabständen die Odometriedaten Phi, 1 von den jeweiligen Erfassungseinrichtungen 10 abzurufen.

In einem Schritt S23 werden beispielsweise die Odometriedaten Phi, 1, die von einem Fahrzeug gesendet werden, eingelesen.

In einem Schritt S25 werden die Odometriedaten Phi, 1 einer Informationseinheit B_n der Geometriekarte zugeordnet.

In einem Schritt S27 werden für den jeweiligen Fahrstreckenabschnitt Fn abhängig von den empfangenen Odometriedaten Phi, 1 Referenz-Odometriedaten Ref_Phi, 1 und/oder ein Referenz-Fahrkorridor und/oder eine Referenz-Trajektorie ermittelt und/oder aktualisiert und/oder verifiziert.

In einem Schritt S28 wird beispielsweise für den jeweiligen Fahrstreckenabschnitt Fn die Informationseinheit B_n, die die Referenz-Odometriedaten Ref_Phi, 1 und/oder den Referenz-Fahrkorridor und/oder die Referenz-Trajektorie des jeweiligen Fahrstreckenabschnitts umfasst, in dem Datenspeicher der zentralen Auswerteinheit gespeichert und kann von Fahrzeugen, die die Informationseinheiten B_n der Geometriekarte nutzen, abgerufen werden. Alternativ oder zusätzlich können die ermittelten und/oder aktualisierten Informationseinheiten B_n jeweils an die Nutzerfahrzeuge gesendet werden.

Die Informationseinheiten B_n können weitere Informationen zu dem jeweiligen Fahrstreckenabschnitt Fn umfassen, beispielsweise Informationen zu Landmarken, eine Fahrspurbreite und so weiter.

Das zweite Programm kann in einem Schritt S29 beendet werden. Bei einem erneuten Empfang oder Abruf der ermittelten und/oder erfassten Odometriedaten Phi, 1 der jeweiligen Fahrzeuge kann das zweite Programm wiederholt ausgeführt werden.

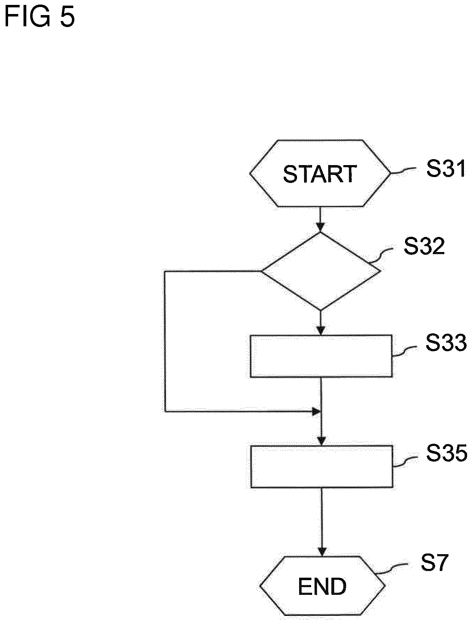

Figur 5 zeigt ein beispielhaftes Ablaufdiagramm für ein drittes Programm zum Betreiben eines Fahrzeugs, das von der zumindest einen Steuereinrichtung 30 ausgeführt wird.

Die Steuereinrichtung 30 weist eine vorgegebene Schnittstelle auf, beispielsweise eine Luftschnittstelle, zum Empfang der von der Auswerteeinrichtung 20 bereitgestellten Informationseinheiten B_n.

Das dritte Programm wird in einem Schritt S31 gestartet, in dem gegebenenfalls Variablen initialisiert werden können.

In einem optionalen Schritt S32 wird beispielsweise geprüft, ob die in einem Speicher der Steuereinrichtung 30 gespeicherten Informationseinheiten B_n für eine geplante Fahrroute des Fahrzeugs aktuell sind. Falls die Informationseinheiten B_n aktuell sind, wird das dritte Programm in dem Schritt S35 fortgesetzt.

Wird erkannt, dass die Informationseinheiten B_n teilweise nicht aktuell oder nicht vorhanden sind, werden in einem Schritt S33 beispielsweise die nicht aktuellen Informationseinheiten B_n und/oder fehlenden Informationseinheiten B_n von der zentralen Auswerteeinheit heruntergeladen und in dem Speicher der Steuereinrichtung 30 gespeichert.

In einem Schritt S35 wird dann für einen jeweils durch das Fahrzeug zu befahrenden Fahrstreckenabschnitt Fn abhängig von den Daten, die die Informationseinheit B_n umfasst, die dem zu befahrenden Fahrstreckenabschnitt Fn zugeordnet ist, eine Soll-Trajektorie des Fahrzeugs für den zu befahrenden Fahrstreckenabschnitt Fn ermittelt.

Der Schritt S35 kann entsprechend der zu befahrenden Fahrstreckenabschnitte Fn des Fahrzeugs wiederholt ausgeführt werden.

In einem Schritt S37 kann das Programm beendet werden, beispielsweise wenn das Fahrzeug geparkt wird.

### Bezugszeichenliste

- 1: System
- 10: Erfassungseinrichtung
- 20: Auswerteeinrichtung
- 30: Steuereinrichtung
- B_n: Informationseinheit
- Fn: Fahrstreckenabschnitt

- Phi,l: Odometriedaten
- Ref_Phi, 1: Referenz-Odometriedaten

## Patentansprüche

1. Verfahren zur Bereitstellung von Daten für eine Geometriekarte für ein autonomes oder automatisiertes Fahren eines Fahrzeugs, bei dem
- jeweils beim Befahren eines jeweiligen vorgegebenen Fahrstreckenabschnitts mit einem Fahrzeug mit vorgegebenen Sensoren des Fahrzeugs Odometriedaten (Phi, 1) des Fahrzeugs erfasst und/oder ermittelt werden (S3),
wobei der jeweilige vorgegebene Fahrstreckenabschnitt (Fn) eine maximale Fahrlänge (Ln) aufweist, die abhängig ist von einer Erfassungsgenauigkeit von Odometriedaten (Phi, 1) durch eine vorgegebene Fahrzeugsensorik und abhängig ist von einer Reproduziergenauigkeit von bereitgestellten Odometriedaten (Phi, 1) durch vorgegebene Fahrzeugstellglieder und/oder Fahrzeugstellantriebe,
- jeweils die für den Fahrstreckenabschnitt erfassten und/oder ermittelten Odometriedaten (Phi, 1) an einer vorgegebenen Schnittstelle des Fahrzeugs bereitgestellt werden (S5) zur Übertragung an eine Auswerteeinrichtung (20), die ausgebildet ist zur Bereitstellung der Geometriekarte.

2. Verfahren nach Anspruch 1,
bei dem den jeweiligen Fahrstreckenabschnitten (Fn) jeweils ein vorgegebener Abschnittstyp zugeordnet ist und die maximale Fahrlänge (Ln) des jeweiligen Fahrstreckenabschnitts abhängig ist von dem jeweils zugeordneten Abschnittstyp.

3. Verfahren nach Anspruch 1 oder 2,
bei dem die maximale Fahrlänge (Ln) des jeweiligen Fahrstreckenabschnitts abhängig ist von zumindest einer Fahrzeugbetriebsgröße und/oder einer Umfeldgröße, die Einfluss auf das Lenkverhalten und/oder Antriebsverhalten des Fahrzeugs hat.

4. Verfahren nach Anspruch 1 oder 2,
bei dem jeweils eine Positionsinformation für das Fahrzeug beim Befahren des jeweiligen Fahrstreckenabschnitt (Fn) ermittelt und/oder bereitgestellt wird und die Odometriedaten (Phi, 1) zugeordnet zu der Positionsinformation des Fahrzeugs bereitgestellt werden.

5. Verfahren nach Anspruch 3,
bei der die Positionsinformation eine erfasste und/oder ermittelte relative oder absolute Position des Fahrzeugs repräsentiert und eine Abweichung zwischen einer realen Position des Fahrzeugs und der erfassten und/oder ermittelten Position des Fahrzeugs kleiner als 10 Zentimeter ist.

6. Vorrichtung (10) zur Bereitstellung von Daten für eine Geometriekarte für ein autonomes oder automatisiertes Fahren eines Fahrzeugs, die ausgebildet ist,
- jeweils beim Befahren eines jeweiligen vorgegebenen Fahrstreckenabschnitts mit einem Fahrzeug mit vorgegebenen Sensoren des Fahrzeugs Odometriedaten (Phi, 1) des Fahrzeugs zu erfassen und/oder zu ermitteln (S3),
wobei der jeweilige vorgegebene Fahrstreckenabschnitt (Fn) eine maximale Fahrlänge (Ln) aufweist, die abhängig ist von einer Erfassungsgenauigkeit von Odometriedaten (Phi, 1) durch eine vorgegebene Fahrzeugsensorik und abhängig ist von einer Reproduziergenauigkeit von bereitgestellten Odometriedaten (Phi,l) durch vorgegebene Fahrzeugstellglieder und/oder Fahrzeugstellantriebe,
- jeweils die für den Fahrstreckenabschnitt erfassten und/oder ermittelten Odometriedaten (Phi, 1) an einer vorgegebenen Schnittstelle des Fahrzeugs bereitzustellen (S5) zur Übertragung an eine Auswerteeinrichtung (20), die ausgebildet ist zur Bereitstellung der Geometriekarte.

7. Verfahren zur Bereitstellung einer Geometriekarte für autonomes oder automatisiertes Fahren, die eine Vielzahl von Informationseinheiten (B_n) umfasst, bei dem
- Daten, die gemäß einem Verfahren nach einem der Ansprüche 1 bis 4 bereitgestellt werden, empfangen werden (S23),
- für die jeweiligen Fahrstreckenabschnitte (Fn) jeweils abhängig von den jeweiligen Odometriedaten (Phi, 1) Referenz-Odometriedaten und/oder ein Referenz-Fahrkorridor und/oder eine Referenz-Trajektorie ermittelt und/oder aktualisiert und/oder verifiziert werden beziehungsweise wird (S27),
- für die jeweiligen Fahrstreckenabschnitte (Fn) jeweils eine Informationseinheit (B_n) bereitgestellt wird (S28), die die Referenz-Odometriedaten (Ref_Phi, 1) und/oder den Referenz-Fahrkorridor und/oder die Referenz-Trajektorie des jeweiligen Fahrstreckenabschnitts umfasst.

8. Vorrichtung zur Bereitstellung einer Geometriekarte für autonomes oder automatisiertes Fahren, wobei die Geometriekarte eine Vielzahl von Informationseinheiten (B_n) umfasst und die Vorrichtung ausgebildet ist,
- Daten, die gemäß einem Verfahren nach einem der Ansprüche 1 bis 4 bereitgestellt werden, zu empfangen (S23),
- für die jeweiligen Fahrstreckenabschnitte (Fn) jeweils abhängig von den jeweiligen Odometriedaten (Phi, 1) Referenz-Odometriedaten (Ref_Phi, 1) und/oder ein Referenz-Fahrkorridor und/oder eine Referenz-Trajektorie zu ermitteln und/oder zu aktualisieren und/oder zu verifizieren (S27),
- für die jeweiligen Fahrstreckenabschnitte (Fn) jeweils eine Informationseinheit (B_n) bereitzustellen (S28), die die Referenz-Odometriedaten (Ref_Phi, 1) und/oder den Referenz-Fahrkorridor und/oder die Referenz-Trajektorie des jeweiligen Fahrstreckenabschnitts umfasst.

9. Verfahren zum Betreiben eines Fahrzeugs, bei dem zumindest eine Informationseinheit (B_n) für einen vorgegebenen Fahrstreckenabschnitt (Fn), die gemäß einem Verfahren nach Anspruch 7 bereitgestellt wird, empfangen wird (S33) und abhängig von Daten, die die Informationseinheit (B_n) umfasst, eine Soll-Trajektorie des Fahrzeugs für den vorgegebenen Fahrstreckenabschnitt (Fn) ermittelt wird (S35).

10. Vorrichtung zum Betreiben eines Fahrzeugs, die ausgebildet ist, zumindest eine Informationseinheit (B_n) für einen vorgegebenen Fahrstreckenabschnitt (Fn), die gemäß einem Verfahren nach Anspruch 5 bereitgestellt wird, zu empfangen (S33) und abhängig von Daten, die die Informationseinheit (B_n) umfasst, eine Soll-Trajektorie des Fahrzeugs für den vorgegebenen Fahrstreckenabschnitt (Fn) zu ermitteln (S35).

11. Computerprogramm, wobei das Computerprogramm ausgebildet ist, ein Verfahren nach einem der Ansprüche 1 bis 5 oder 7 oder 9 bei seiner Ausführung auf einer Datenverarbeitungsvorrichtung durchzuführen.

12. Computerprogrammprodukt umfassend ausführbaren Programmcode, wobei der Programmcode bei Ausführung durch eine Datenverarbeitungsvorrichtung das Verfahren nach einem der Ansprüche 1 bis 5 oder 7 oder 9 ausführt.

## Claims

1. Method for providing data for a geometric map for autonomous or automated driving of a vehicle, in which
- when driving along a respective specified route section using a vehicle with specified vehicle sensors, odometry data (Phi, 1) of the vehicle are respectively detected and/or determined (S3), wherein the respective specified route section (Fn) has a maximum driving length (Ln), which is dependent on a detection precision of odometry data (Phi, 1) by means of a specified vehicle sensor system and dependent on a reproducibility of provided odometry data (Phi, 1) by means of specified vehicle actuators and/or vehicle actuating drives,
- the odometry data (Phi, 1) detected and/or determined for the route section are respectively provided (S5) at a specified vehicle interface for transmission to an evaluation device (20) which is designed to provide the geometric map.

2. Method according to Claim 1,
in which a specified section type is respectively assigned to the respective route sections (Fn) and the maximum driving length (Ln) of the respective route section is dependent on the respective assigned section type.

3. Method according to Claim 1 or 2,
in which the maximum driving length (Ln) of the respective route section is dependent on at least one vehicle operating factor and/or one environmental factor that influences the steering behaviour and/or the drive response of the vehicle.

4. Method according to Claim 1 or 2,
in which one piece of positioning information for the vehicle when driving along the respective route section (Fn) is respectively determined and/or provided and the odometry data (Phi, 1) are provided in a manner assigned to the positioning information of the vehicle.

5. Method according to Claim 3,
in which the positioning information represents a detected and/or determined relative or absolute position of the vehicle and a deviation between a real position of the vehicle and the detected and/or determined position of the vehicle is less than 10 centimetres.

6. Device (10) for providing data for a geometric map for autonomous or automated driving of a vehicle that is designed
- when driving along a respective specified route section using a vehicle with specified vehicle sensors, to respectively detect and/or determine (S3) odometry data (Phi, 1) of the vehicle, wherein the respective specified route section (Fn) has a maximum driving length (Ln), which is dependent on a detection precision of odometry data (Phi, 1) by means of a specified vehicle sensor system and dependent on a reproducibility of provided odometry data (Phi, 1) by means of specified vehicle actuators and/or vehicle actuating drives,
- to respectively provide (S5) the odometry data (Phi, 1) detected and/or determined for the route section at a specified vehicle interface for transmission to an evaluation device (20) which is designed to provide the geometric map.

7. Method for providing a geometric map for autonomous or automated driving, comprising a plurality of informational units (B_n), in which
- data that are provided in accordance with a method according to one of Claims 1 to 4 are received (S23),
- for the respective route sections (Fn), reference odometry data and/or a reference driving route and/or a reference trajectory is/are determined and/or updated and/or verified (S27) in each case depending on the respective odometry data (Phi, 1),
- for the respective route sections (Fn), one informational unit (B_n) is respectively provided (S28) that comprises the reference odometry data (Ref_Phi, 1) and/or the reference driving route and/or the reference trajectory of the respective route section.

8. Device for providing a geometric map for autonomous or automated driving, wherein the geometric map comprises a plurality of informational units (B_n) and the device is designed
- to receive (S23) data that are provided in accordance with a method according to one of Claims 1 to 4,
- for the respective route sections (Fn), to determine and/or update and/or verify (S27) reference odometry data (Ref_Phi, 1) and/or a reference driving route and/or a reference trajectory in each case depending on the respective odometry data (Phi, 1),
- for the respective route sections (Fn), to respectively provide (S28) one informational unit (B_n) that comprises the reference odometry data (Ref_Phi, 1) and/or the reference driving route and/or the reference trajectory of the respective route section.

9. Method for operating a vehicle, in which at least one informational unit (B_n) for a specified route section (Fn), which is provided in accordance with a method according to Claim 7, is received (S33) and, depending on data that the informational unit (B_n) comprises, a target trajectory of the vehicle is determined (S35) for the specified route section (Fn) .

10. Device for operating a vehicle that is designed to receive (S33) at least one informational unit (B_n) for a specified route section (Fn), which is provided in accordance with a method according to Claim 5, and, depending on data that the informational unit (B_n) comprises, to determine (S35) a target trajectory of the vehicle for the specified route section (Fn).

11. Computer program, wherein the computer program is designed to carry out a method according to one of Claims 1 to 5 or 7 or 9 during its execution on a data processing device.

12. Computer program product comprising executable program code, wherein the program code carries out the method according to one of Claims 1 to 5 or 7 or 9 during execution by a data processing device.

## Revendications

1. Procédé de fourniture de données pour une carte géométrique pour une conduite autonome ou automatisée d'un véhicule, avec lequel
- lors du franchissement d'une portion de trajet respectivement prédéfinie avec un véhicule, des données odométriques (Phi, 1) du véhicule sont acquises et/ou déterminées avec des capteurs prédéfinis du véhicule (S3), la portion de trajet respectivement prédéfinie (Fn) possédant une longueur de déplacement maximale (Ln) qui est dépendante d'une précision d'acquisition des données odométriques (Phi, 1) par un système de détection de véhicule prédéfini et qui est dépendante d'une précision de reproduction des données odométriques (Phi, 1) fournies par des actionneurs de véhicule et/ou des organes de commande de véhicule prédéfinis,
- les données odométriques (Phi, 1) respectivement acquises et/ou déterminées pour la portion de trajet sont fournies à une interface prédéfinie du véhicule (S5) en vue de leur transmission à un dispositif d'interprétation (20) qui est configuré pour la fourniture de la carte géométrique.

2. Procédé selon la revendication 1, avec lequel un type de portion prédéfini est respectivement associé aux portions de trajet (Fn) respectives et la longueur de déplacement maximale (Ln) de la portion de trajet respective est dépendante du type de portion respectivement associé.

3. Procédé selon la revendication 1 ou 2, avec lequel la longueur de déplacement maximale (Ln) de la portion de trajet respective est dépendante d'au moins une grandeur opérationnelle de véhicule et/ou d'une grandeur d'environnement qui a une influence sur le comportement de direction et/ou le comportement de propulsion du véhicule.

4. Procédé selon la revendication 1 ou 2, avec lequel une information de position est respectivement déterminée et/ou fournie pour le véhicule lors du franchissement de la portion de trajet (Fn) respective et les données odométriques (Phi, 1) sont fournies de manière associée à l'information de position du véhicule.

5. Procédé selon la revendication 3, avec lequel l'information de position représente une position relative ou absolue détectée et/ou déterminée du véhicule et un écart entre une position réelle du véhicule et la position détectée et/ou déterminée du véhicule est inférieur à 10 centimètres.

6. Arrangement (10) de fourniture de données pour une carte géométrique pour une conduite autonome ou automatisée d'un véhicule, lequel est configuré pour
- à chaque fois lors du franchissement d'une portion de trajet respectivement prédéfinie avec un véhicule, acquérir et/ou déterminer des données odométriques (Phi, 1) du véhicule avec des capteurs prédéfinis du véhicule (S3),
la portion de trajet respectivement prédéfinie (Fn) possédant une longueur de déplacement maximale (Ln) qui est dépendante d'une précision d'acquisition des données odométriques (Phi, 1) par un système de détection de véhicule prédéfini et qui est dépendante d'une précision de reproduction des données odométriques (Phi, 1) fournies par des organes de commande de véhicule et/ou des servomoteurs de véhicule prédéfinis,
- fournir les données odométriques (Phi, 1) respectivement acquises et/ou déterminées pour la portion de trajet à une interface prédéfinie du véhicule (S5) en vue de leur transmission à un dispositif d'interprétation (20) qui est configuré pour la fourniture de la carte géométrique.

7. Procédé de fourniture d'une carte géométrique pour la conduite autonome ou automatisée, qui comporte une pluralité d'unités d'information (B_n), avec lequel
- des données, qui sont fournies conformément à un procédé selon l'une des revendications 1 à 4, sont reçues (S23),
- pour les portions de trajet (Fn) respectives, des données odométriques de référence et/ou un corridor de déplacement de référence et/ou une trajectoire de référence est ou sont déterminés et/ou actualisés et/ou vérifiés en fonction des données odométriques (Phi, 1) respectives (S27),
- pour les portions de trajet (Fn) respectives, une unité d'information (B_n) est respectivement fournie (S28), laquelle comporte les données odométriques de référence (Ref_Phi, 1) et/ou le corridor de déplacement de référence et/ou la trajectoire de référence de la portion de trajet respective.

8. Arrangement de fourniture d'une carte géométrique pour la conduite autonome ou automatisée, la carte géométrique comportant une pluralité d'unités d'information (B_n) et l'arrangement étant configuré pour
- recevoir des données qui sont fournies conformément à un procédé selon l'une des revendications 1 à 4 (S23),
- pour les portions de trajet (Fn) respectives, déterminer et/ou actualiser et/ou vérifier des données odométriques de référence (Ref_Phi, 1) et/ou un corridor de déplacement de référence et/ou une trajectoire de référence en fonction des données odométriques (Phi, 1) respectives (S27),
- pour les portions de trajet (Fn) respectives, respectivement fournir une unité d'information (B_n) (S28), laquelle comporte les données odométriques de référence (Ref_Phi, 1) et/ou le corridor de déplacement de référence et/ou la trajectoire de référence de la portion de trajet respective.

9. Procédé pour faire fonctionner un véhicule, avec lequel au moins une unité d'information (B_n) pour une portion de trajet (Fn) prédéfinie, qui est fournie conformément à un procédé selon la revendication 7, est reçue (S33) et une trajectoire de consigne du véhicule pour la portion de trajet (Fn) prédéfinie est déterminée en fonction de données que comporte l'unité d'information (B_n) (S35).

10. Arrangement pour faire fonctionner un véhicule, lequel est configuré pour recevoir au moins une unité d'information (B_n) pour une portion de trajet (Fn) prédéfinie, qui est fournie conformément à un procédé selon la revendication 5 (S33), et pour déterminer une trajectoire de consigne du véhicule pour la portion de trajet (Fn) prédéfinie en fonction de données que comporte l'unité d'information (B n) (S35).

11. Programme informatique, le programme informatique étant configuré pour mettre en œuvre un procédé selon l'une des revendications 1 à 5 ou 7 ou 9 lors de son exécution sur un arrangement de traitement de données.

12. Produit de programme informatique, comprenant un code de programme exécutable, le code de programme mettant en œuvre le procédé selon l'une des revendications 1 à 5 ou 7 ou 9 lors de son exécution par un arrangement de traitement de données.
